# EUROPEAN PATENT SPECIFICATION

(11) **EP 1 982 464 B1**
(45) Date of publication and mention of the grant of the patent: **23.10.2013**
(21) Application number: 07712698.5
(22) Date of filing: 09.02.2007
(51) Int. Cl.: H04W 4/08, H04W 76/04, H04W 8/24, H04L 12/58

(54) **MESSAGING SYSTEM**
NACHRICHTENSYSTEM
SYSTÈME DE MESSAGERIE

(30) Priority: 10.02.2006 GB 0602765
(43) Date of publication of application: 22.10.2008
(73) Proprietor: Communigate Ltd., St. James South Elmham Halesworth Suffolk IP19 0HR (GB)
(72) Inventor: HAYTON, Paul, Michael, Oxfordshire OX27 7QR (GB); JONES, Philip, Stephen, Suffolk IP19 0HR (GB)
(74) Representative: Nicholls, Michael John
(86) International application number: PCT/GB2007/000466
(87) International publication number: WO 2007/091089

(56) References cited:
- EP-A- 1 164 803
- BARAVAGLIO A ET AL: "Web Service Applicability in Telecommunication Service Platforms" NEXT GENERATION WEB SERVICES PRACTICES, 2005. NWESP 2005. INTERNATIONAL CONFERENCE ON SEOUL, KOREA 22-26 AUG. 2005, PISCATAWAY, NJ, USA,IEEE, 22 August 2005 (2005-08-22), pages 39-44, XP010892543 ISBN: 0-7695-2452-4

## Description

The present invention relates to a system for sending text, text messages, pictures, files and emails between mobile terminals such as mobile telephones, and in particular to a system and method for establishing a network or community of users in contact with each other.

Current mobile telephones have the capability of sending text messages to other mobile telephones via the Short Messaging Service (SMS) or via the Multimedia Messaging System (MMS). Such messages are addressed and routed by means of the mobile telephone numbers of the users. Messages may also be sent by means of e-mails from mobile telephones or other mobile terminals by establishing a WAP (or other) Internet connection. An example can be found in EP 1 164 803.

While text messaging via SMS has become very popular, such messages are expensive to send, and are severely limited in length. E-mails sent over WAP Internet connections, on the other hand, require the fairly heavy overhead of the WAP protocol, and also the exchange in advance of e-mail addresses between users who wish to be in contact.

According to the present invention, given users who have respective mobile communications devices (mobile telephones or telephony-capable PDAs) having a conventional text-messaging facility such as SMS and the ability to execute downloaded software, the invention proposes an alternate messaging system (AMS) which a user can join by automated downloading and installation of a software application executable by his or her device, the software presenting the user with a control interface to the AMS to establish and operate a messaging account with the AMS.

The AMS system preferably includes a server for storing user details, and for storing messages between users. When a new message is received by the server from a user node, the server will instruct a conventional modem to dial the recipient's phone number and hang up the call after one or two rings are detected by the modem. By this method, the recipient is informed that a message is waiting to be retrieved from the server. Such messages are downloaded to users when they connect to the server by using the software application on their mobile device and are displayed in the familiar form of an "inbox".

Further, given a user whose mobile communications device has been loaded with the software application providing the interface to the AMS, the user may invite a new user to join by selecting an "invite " function of the application and inputting the new user's telephone number. The user's device then automatically sends a message, preferably over the AMS, to the AMS server which, in turn, uses an existing messaging service, such as the SMS, to send a message to the new user advising them of the invitation. If the new user accepts the invitation by activating the web link contained in the message, automatic download of the software application for the AMS from the AMS server is initiated. Thus a community of users of the AMS grows without requiring great effort on the part of the service provider or users. It also builds the membership of a user community and/or creates new user communities.

The server may place respective messages in the inboxes of each of the inviter (existing user) and invitee (new user) each message appearing to be from the other person thereby establishing the communication path between them which can be used without further reference to the SMS or their telephone numbers.

Put differently, the present invention contemplates a method of growing a data communications network service by providing for an existing user node of the network service to send an invitation message to a potential new user node, which invitation message is sent to a server via the network service, passed by the server to the potential new user node by a different communications service, and on acceptance by the potential new user node, a software application providing for the new user node to be incorporated into the data communications network service is automatically downloaded to the new user node. Preferably both user nodes are then provided by the server with each other's contact details within the data communications network service, for example by placing dummy messages each appearing to be from the other node in respective inboxes for the user nodes. This communications network is therefore grown through the propagation of invitations from one user's mobile device to a new user, i.e. on a peer-to-peer basis, without need to visit a web site and without the need for any user to be assigned as an administrator. Instead all users have an equal ability to invite other members to join their communications group.

In another aspect the present invention provides for the transmission of the AMS messages over the data bearers of 2.5G and 3G cellular wireless radio networks including but not limited to: GPRS, EDGE, W-CDMA, CDMA2000 & HSDP. Using a proprietary mobile Metalanguage the actual amount of data sent is minimised avoiding all the overheads associated with employing widely available protocols such as WAP and WML . For example all unnecessary server-side http headers are disabled (e.g. Server signature and expose-php). Furthermore, on the phone-side software the minimum possible user account header structure is used. The result is an extremely efficient method of sending data from one mobile to another that, under the commercial model currently deployed by mobile phone network operators, means a user can send a message to another for a fraction of the cost of existing techniques such as SMS (Short Message Service).

Thus in one aspect the invention provides a method of extending a data communications network service by providing for an existing user node of the data communications network service to form an invitation message to a potential new user node, which invitation message is sent to a server via the data communications network service, passed by the server to the potential new user node by a different communications service, and on acceptance by the potential new user node, a software application providing for the new user node to be incorporated into the data communications network service is automatically downloaded to the new user node.

Preferably the said different communications service is one usable by both nodes independently of said data communications network service. Both nodes are also capable of using the data communications network service.

Preferably the data communications network service transmits and receives data via the Internet, and the different communications service is provided via telephony, for example the Short Messaging Service, though other combinations of different communications routes used in the invitation process are possible.

Preferably, following automatic download of the software application both user nodes are then provided by the server with each other's contact details within the data communications network service, so that they can then easily communicate via that service. This can be achieved by the server providing both user nodes with each other's contact details by placing dummy messages each appearing to be from the other node in respective inboxes for the user nodes.

The data communications network service is provided over the data bearers of 2.5G and 3G cellular wireless radio networks including: GPRS, EDGE, W-CDMA, CDMA2000 & HSDP. The user nodes ma be cellular telephones or cellular telephony-enabled personal digital assistants.

Preferably the software application includes program code means for providing for the user to form said invitation message.

The invitation message may be directed to the new user node by means of the telephone number of the new user node as entered to the existing user node.

Preferably upon reception at the server of a new message for an existing user node, the server sends an alerting signal to the existing user node via said different communications service, such as a telephone call, e.g. over the cellular telephone network, and preferably the telephone call is terminated upon reception of a ringing tone from the existing user node. This means that the user is alerted to the presence of a message at the server without needing to answer the alerting call, and can see the missed call notification.

Another aspect of the invention provides a communications network service comprising a server and a plurality of user nodes wherein the server and each of said user nodes is provided with a software application for executing the method above.

Yet a further aspect of the invention provides a server adapted for use in such a communications network service and provided with a software application effective to for receiving invitation messages sent via the data communications network service, passing them to the potential new user node by a different communications service, and on acceptance by the potential new user node, and providing for the new user node to be incorporated into the data communications network service.

The invention will be further described by way of example with reference to the accompanying drawings, in which:-
Figure 1 is a schematic overview of an embodiment of the messaging system;
Figure 2 is a block diagram of the server and mobile device software applications in an embodiment of the messaging system;
Figure 3 is a schematic overview of the propagation mechanism according to an embodiment of the invention;
Figure 4 is a flow diagram of the propagation mechanism according to an embodiment of the invention;
Figure 5 is a screenshot of the user interface at which the user inputs his own details;
Figure 6 is a screenshot of the user interface showing a user's Inbox;
Figure 7 is a screenshot of the user interface showing a downloaded message from the Inbox;
Figure 8 is a screenshot of the user interface showing a group of contacts for a user;
Figure 9 is a screenshot of the user interface showing the invitation function of the application; and
Figure 10 is a screenshot of the user interface showing the user's Inbox;
Figure 11 is a screenshot of the user interface showing the creation of an e-mail instead of a message on the AMS; and
Figure 12 is a screenshot of the user interface showing the editing of such an e-mail.

### System Description

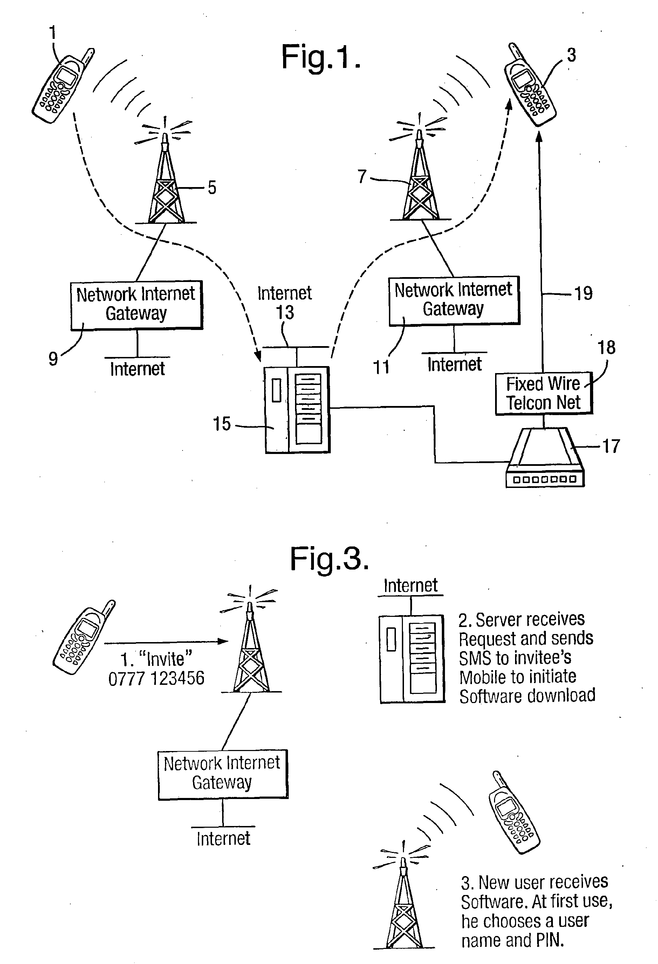

Figure 1 is a schematic overview of an embodiment of the messaging system. Illustratively two mobile terminals 1 and 3, forming user nodes of the network service (AMS) are shown, though in practice there is an arbitrarily large number of them, each in contact with a respective base station 5, 7 of a cellular communications system. The cellular communications system provides network internet gateways 9, 11 to the Internet 13 and thereby allows the mobile terminals to be in data communication over the Internet with the AMS server 15. The AMS server 15 is on a fixed IP address and stores a message database and a web server application. It can also communicate with the mobile terminals 1 and 3 by a conventional call over the telephone network 18 using the AT modem 17.

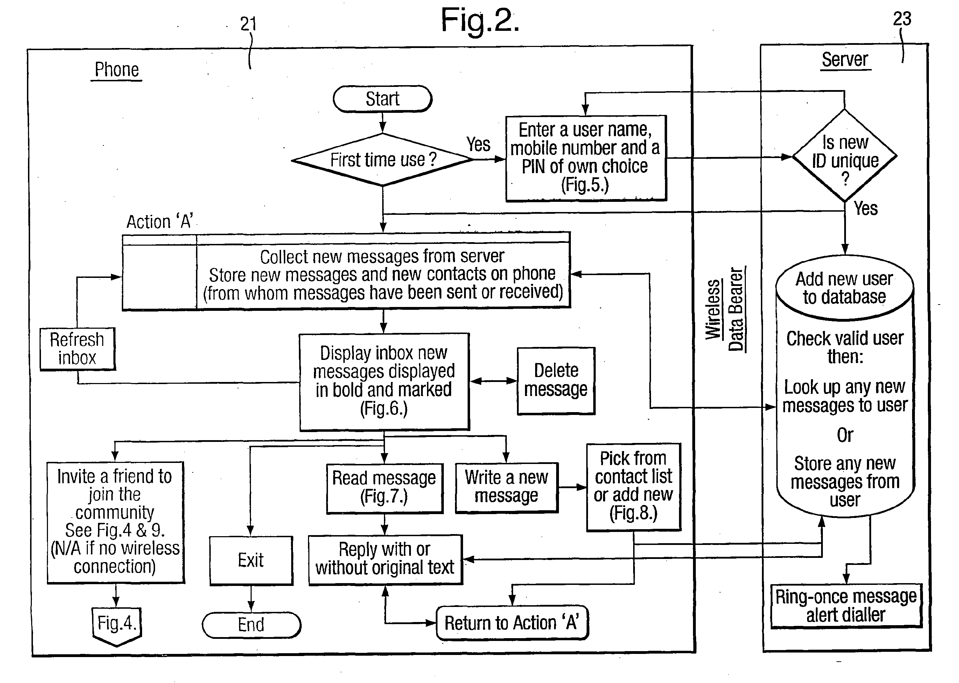

As shown in Figure 2 every user or community member has on their terminal a program (software application) 21 which resides in the memory of their mobile terminal 1, 3 such as a mobile telephone or telephony-capable PDA. The AMS server has a corresponding system application 23 for providing the AMS service. Fig 2 describes in block diagram form the programs and exchange with the remote server and the database that resides upon it.

When the program 21 is launched (i.e. in the case of an existing user), a GPRS or other internet connection over the phone's pre-configured Data Bearer is initiated between the terminal 1, 3 and the server 15. The server 15 is identified via a URL that re-diverts to the server's unique (fixed) IP address.

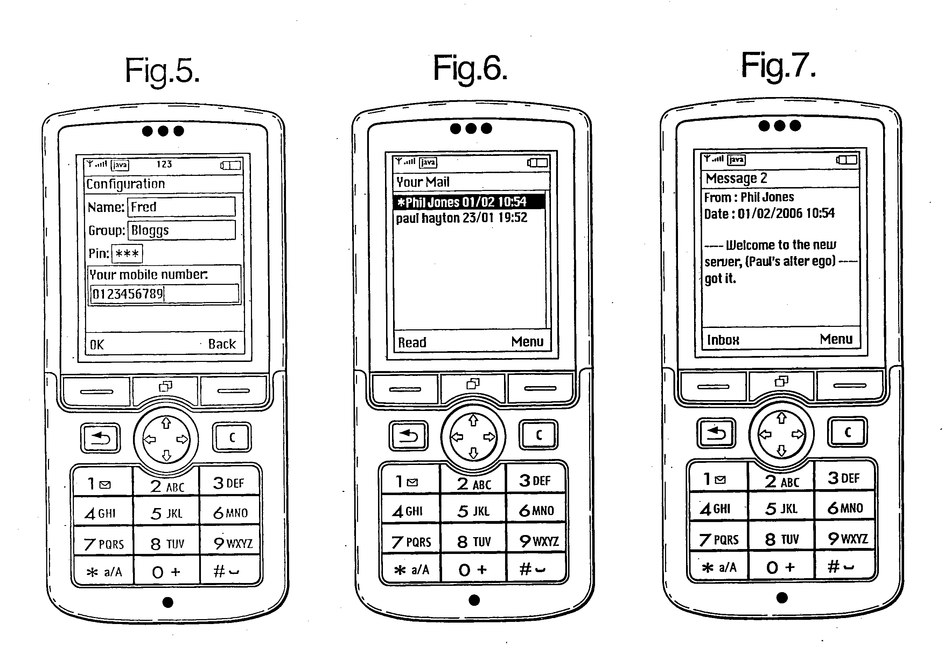

The server 15 then looks up and verifies the user's unique ID (Name and PIN) and checks for any new messages waiting to be collected from the user's inbox (post-box). Any messages are sent to the user's terminal 1, 3 with the sender's name and the time the message was received by the server 15. Safe receipt of each message is confirmed by the terminal 1, 3 back to the server 15 to prevent the message being resent in subsequent sessions. The user is able to refresh the inbox whilst in the program. Figure 6 illustrates an example screenshot of the display of a user's inbox.

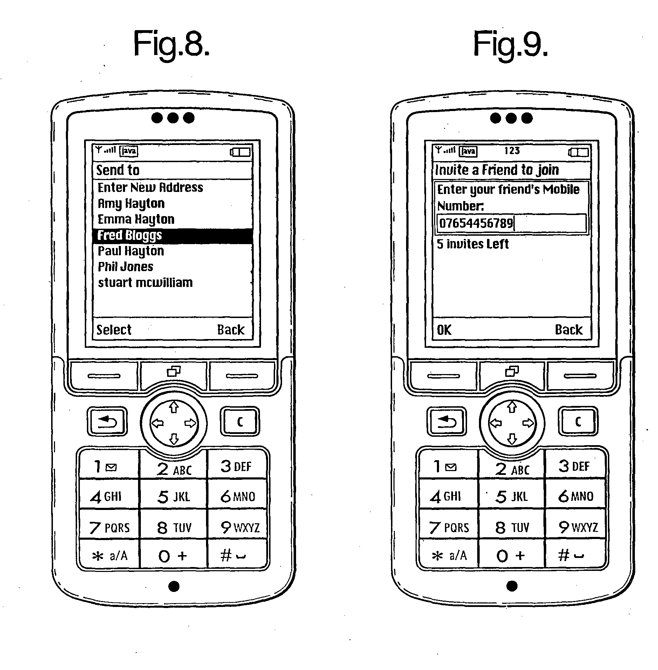

The user may read, delete, forward, reply to or create new messages to anybody who also uses the system, an example screenshot being shown in Figure 7. When a new message is sent to another user, the server will initiate a "ring-once" message alert 19 to the recipient to inform him or her that a new message is available for download. This process uses a standard AT modem 17 connected to the server 15 and to the fixed-line telecom network 18. The database looks up the telephone number of the recipient, dials the number, then hangs up the phone when a ring tome is detected by the modem. The program 21 provides every user with a personal address book, an example being shown in Figure 8. New addresses can be added manually but the address book is also automatically updated as messages are received from any new contact. Thus the system automatically generates and maintains a list of contacts that the user can communicate with using this system.

Senders can be "barred", for example, to prevent malicious or unwanted messages being received.

Each user node can develop a distribution list on his or her mobile terminal by selecting two or more contacts from his contact list and naming them as one distribution list. A single message can then be composed and sent to the distribution list.

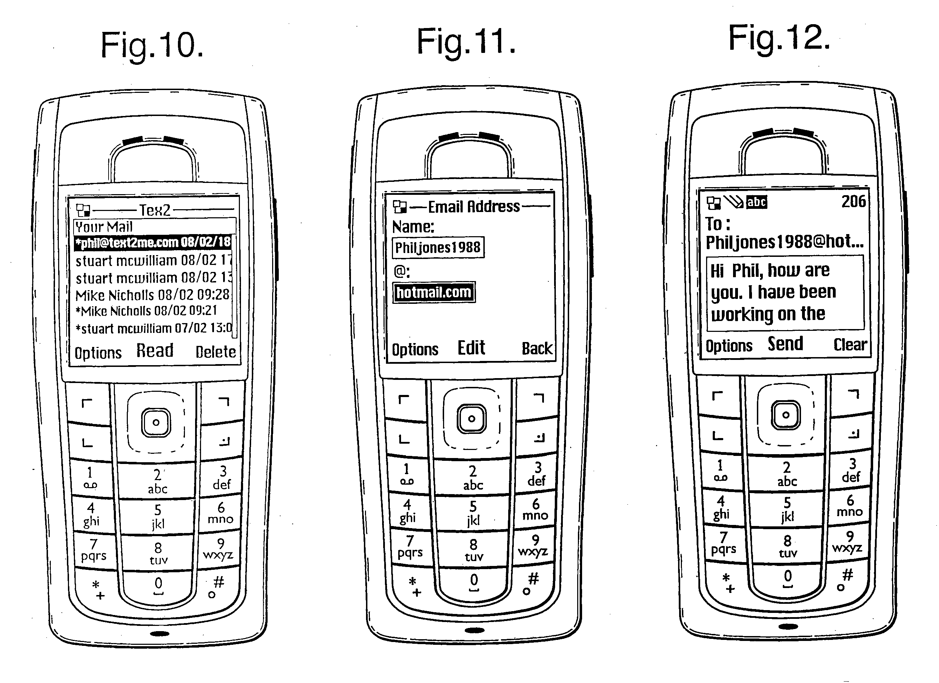

Further, in this embodiment, each user of the AMS is automatically assigned an e-mail address consisting of his user name and the domain host name (eg phil.jones@tex2me.com). Typically an e-mail will consist of several elements as well as the body text, that are not well suited to display on a mobile terminal due to the typical screen size and resolution of such terminal. Therefore, according to this invention, a smart filter has been developed. The smart filter resides on the AMS message server 15 and removes any attachments, pictures and/or signatures from the e-mail, thereby extracting the body text or the message. This is then transmitted to the recipient's inbox in the same way as a normal AMS message (ie a ring-alert is generated to inform the user to connect to the server by use of the application to retrieve and display the message). An example of an Inbox showing e-mails as well as messages via the AMS is shown in Figure 10 with e-mails identified by an asterisk symbol. Furthermore, the user can reply to such e-mails, or indeed initiate a new e-mail from their mobile terminal by using the application. Figure 11 illustrates the creation of the e-mail addressee and Figure 12 the editing function following selection of the <EDIT> function from Figure 11. The AMS server directs such messages to the recipient. As with other message types, the application's contact book is automatically updated with new e-mail addresses from send and received mail.

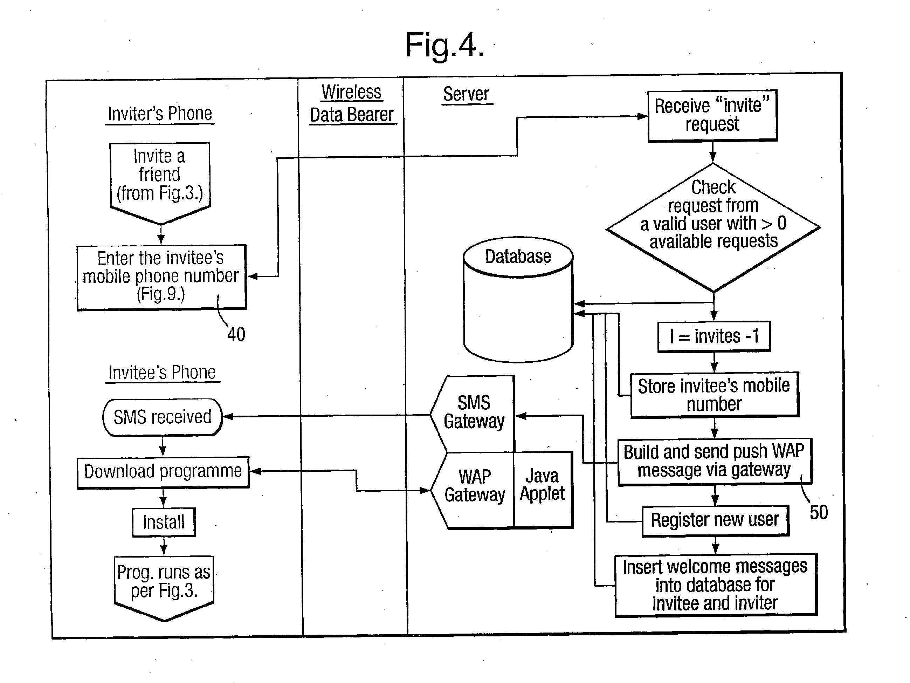

As illustrated in Figures 3 and 4 the user base grows as a result of each user's ability to "invite" others to join the system. The number of invitees each initiator is 'allowed' may be varied and is defined by the program 21. On initiation of the invite function of program 21 the program 21 allows user to enter the mobile phone number of the invitee into the server database via the program 21 on their mobile phone at step 40, an example screenshot being shown in Figure 9.

At step 50 the server 15 then sends a push SMS to the invitee's terminal to initiate download of the application 21 to the new user's terminal. The invitee reads the SMS message and, if he accepts the invitation to join, the software application 21 providing the interface to the AMS system is automatically downloaded to his terminal. This can be, for example, by directing the Internet browser of the new user's terminal to a download link at the server 15. Once download is complete the new user is asked to select/input a username and PIN (Personal Identification Number). An example of this screenshot is shown in Figure 5. The username is checked for uniqueness by the server 15 and, once a unique username is arrived at, stored for that user. The server then places messages, as if from the invitee to the initiator, and vice-versa, into the system database, in fact into their respective inboxes, to initiate contact between the two parties.

The terminal-based application 21 builds a contact list that feeds from those people who have either been sent messages or from whom messages have been received.

By this method, an arbitrarily large number of user communities are formed. An individual can be a member of several communities. Inter as well as intra community communication is thereby facilitated across the universe of users.

Let us examine the example where the initiator, Bob, a present user, invites Phil:
1. Bob powers up his mobile phone and starts the program.
2. Bob selects the "invite a friend" option from the program's menu.
3. Bob enters Phil's mobile phone number which is transmitted by the System and entered into the database on the server 15
4. The server 15 sends Phil a "WAP Push" SMS via a commercial SMS gateway.
5. Phil receives the Push SMS 'welcome' message informing him that his friend, Bob, has sent him a message via the System. The message informs Phil that Bob has invited him to join the system. If Bob accepts the invitation, his phone's WAP browser is directed to the system's WAP site.
6. From this WAP site Phil views an explanation of the system. If he chooses, he is able to download the program onto his phone.
7. When Phil starts up the program for the first time, he is asked to choose a user name and PIN and to enter his mobile telephone number. These details are sent by the System to the server, which checks to see if that user name has been taken by anyone. If it is free, then a user is created on the database.
8. If the username has been taken, the invitee is asked to select an alternative.
9. At the same time, a message to Phil which appears to come from Bob is inserted into the database. In this way, the database welcomes the user to the system. - this uses the mobile phone number to unite the inviter and invitee.
10. Simultaneously a confirming note is put into Bob's inbox, as if from Phil, to confirm that he is now on the system

The exchange of messages in 5 and 6 above is the unique mechanism by which the system ensures that both parties (the initiator and the invitee) have each other's ID and can immediately 'chat' using the system without having to exchange user names outside of the closed system.

### User name format and checking:

A new user chooses a two part user name, each of up to 16 characters and a secret PIN. If the user name is unique to the database at time of application, it is allocated. The second part of the user name may refer to the specific user group (community) which the new user is to become a member of, but this is not mandatory. It does, however, foster the sense of community.

There are certain circumstances, for example during a software upgrade, or existing mobile phone upgrade, when an existing user might want reinstall the software and 'sign up' again. This is where the PIN is important - if the user name and PIN are the same of an existing user, then the system does not create a new user since it identifies an existing user who is initiating a new version of the software.

### The invitation process

To prevent misuse, each user is allowed a set number of invitees in a set period of time. Successful creation of valid invitees can be rewarded by more invite credits. The server 15 can allocate the free invites based on pre-set rules. For example, each new user might be allocated 10 invites. If these are used within 1 week, and each of those invitees become active messages then another 10 are allocated.

### Server-side communities

It will be appreciated from the above that as users are added a number of "communities" are established by means of entries in the user's address books. The server 15 may provide for the establishment of a number of named communities by each being a named list of contacts which a lead user may edit, add to and circulate to other members.

## Claims

1. A method of extending a data communications network service by providing for an existing user node (1, 3) of the data communications network service to form an invitation message to a potential new user node (1, 3), which invitation message is sent to a server (15) via the data communications network service, **characterized in that**:
the invitation message is passed by the server (15) to the potential new user node (1, 3) by a different communications service, and on acceptance by the potential new user node (1, 3), a software application (21) providing for the new user node (1, 3) to be incorporated into the data communications network service is automatically downloaded to the new user node (1, 3).

2. A method according to claim 1 wherein the data communications network service transmits and receives data via the Internet (13).

3. A method according to claim 1 wherein the different communications service is the Short Messaging Service.

4. A method according to claim 1 wherein following automatic download of the software application (21) both user nodes (1, 3) are then provided by the server (15) with each other's contact details within the data communications network service.

5. A method according to claim 4 wherein both user nodes (1, 3) are provided by the server (15) with each other's contact details by placing dummy messages each appearing to be from the other node in respective inboxes for the user nodes (1, 3).

6. A method according to any one of the preceding claims wherein said data communications network service is provided over the data bearers of 2.5G and 3G cellular wireless radio networks including: GPRS, EDGE, W-CDMA, CDMA2000 & HSDP.

7. A method according to any one of the preceding claims wherein said user nodes (1, 3) are cellular telephones or cellular telephony-enabled personal digital assistants.

8. A method according to any one of the preceding claims wherein said software application (21) includes program code means for providing for the user to form said invitation message.

9. A method according to any one of the preceding claims wherein said invitation message is directed to the new user node (1, 3) by means of the telephone number of the new user node (1, 3) as entered to the existing user node (1, 3).

10. A method according to any one of the preceding claims wherein upon reception at the server of a new message for an existing user node (1, 3), the server (15) sends an alerting signal to the existing user node (1, 3) via said different communications service.

11. A method according to claim 10 wherein the alerting signal to the existing user node is a telephone call.

12. A method according to claim 11 wherein the telephone call is terminated upon reception of a ringing tone from the existing user node.

13. A communications network service comprising a server (15) and a plurality of user nodes (1, 3) wherein the server (15) and each of said user nodes (1, 3) is provided with a software application for executing the method of any one of the preceding claims.

14. A server (15) adapted for use in a communications network service as defined in claim 13 and provided with a software application (21) effective to receive invitation messages sent via the data communications network service, pass them to the potential new user node (1, 3) by a different communications service, and on acceptance by the potential new user node (1, 3), and providing for the new user node (1, 3) to be incorporated into the data communications network service.

## Patentansprüche

1. Verfahren zum Erweitern eines Datenkommunikationsnetzdienstes durch Unterstützen eines bestehenden Benuterknotens (1, 3) des Datenkommunikationsnetzdienstes, eine Einladungsnachricht für einen potenziellen neuen Benutzerknoten (1, 3) auszubilden, wobei die Einladungsnachricht über den Datenkommunikationsnetzdienst zu einem Server (15) gesendet wird, **dadurch gekennzeichnet, dass**:
die Einladungsnachricht von dem Server (15) mittels eines anderen Kommunikationsdienstes zu dem potenziellen neuen Benutzerknoten (1, 3) geleitet wird, und dass einer Annahme durch den potenziellen neuen Benutzerknoten (1, 3) eine Softwareanwendung (21) automatisch zu dem neuen Benutzerknoten (1, 3) heruntergeladen wird, welche den neuen Benutzernoten (1, 3) unterstützt, in den Datenkommunikationsnetzdienst aufgenommen zu werden.

2. Verfahren nach Anspruch 1, wobei der Datenkommunikationsnetzdienst Daten über das Internet (13) überträgt und empfängt.

3. Verfahren nach Anspruch 1, wobei der andere Kommunikationsdienst der Kurznachrichtendienst (Short Messaging Service) ist.

4. Verfahren nach Anspruch 1, wobei nachfolgend zu dem automatischen Herunterladen der Softwareanwendung (21) beide Benutzerknoten (1, 3) dann von dem Server (15) mit ihren gegenseitigen Kontaktdetails innerhalb des Datenkommunikationsnetzdienstes versorgt werden.

5. Verfahren nach Anspruch 4, wobei beide Benutzerknoten (1, 3) von dem Server (15) mit ihren gegenseitigen Kontaktdetails versorgt werden, indem Blindnachrichten in entsprechenden Eingangsbehältern für die Benutzerknoten (1, 3) platziert werden, welche jeweils als von dem anderen Knoten erscheinen.

6. Verfahren nach einem der vorhergehenden Ansprüche, wobei der Datenkommunikationsnetzdienst über die Zubringer von 2.5G und 3G zellularen drahtlosen Funknetzen bereitgestellt wird, welche GPRS, EDGE, W-CDMA, CDMA2000 & HSDP aufweisen.

7. Verfahren nach einem der vorhergehenden Ansprüche, wobei die Benutzerknoten (1, 3) Funktelefone oder persönliche digitale Assistenten mit Funkbefähigung sind.

8. Verfahren nach einem der vorhergehenden Ansprüche, wobei die Softwareanwendung (21) Programmcodemittel aufweist, um den Benutzer zu unterstützen, die Einladungsnachricht zu bilden.

9. Verfahren nach einem der vorhergehenden Ansprüche, wobei die Einladungsnachricht zu dem neuen Benutzerknoten (1, 3) mittels der Telefonnummer des neuen Benutzerknotens (1, 3) geleitet wird, wie sie dem bestehenden Benutzerknoten (1, 3) eingegeben wurde.

10. Verfahren nach einem der vorhergehenden Ansprüche, wobei aufgrund eines Empfangs einer neuen Nachricht für einen bestehenden Benutzerknoten (1, 3) an dem Server, der Server (15) ein Meldesignal über den anderen Kommunikationsdienst zu dem bestehenden Benutzerknoten (1, 3) sendet.

11. Verfahren nach Anspruch 10, wobei das Meldesignal für den bestehenden Benutzerknoten ein Telefonanruf ist.

12. Verfahren nach Anspruch 11, wobei der Telefonanruf aufgrund eines Empfangs eines Klingeltons von dem bestehenden Benutzerknoten beendet wird.

13. Kommunikationsnetzdienst umfassend einen Server (15) und mehrere Benutzerknoten (1, 3), wobei der Server (15) und jeder der Benutzerknoten (1, 3) mit einer Softwareanwendung zum Ausführen des Verfahrens nach einem der vorhergehenden Ansprüche versehen ist.

14. Server (15), welcher für eine Verwendung in einem Kommunikationsnetzdienst nach Anspruch 13 ausgestaltet ist, und welcher in wirksamer Weise mit einer Softwareanwendung (21) versehen, um über den Datenkommunikationsnetzdienst gesendete Einladungsnachrichten zu empfangen, sie zu dem potenziellen neuen Benutzerknoten (1, 3) über einen anderen Kommunikationsdienst zu leiten, und, bei einer Annahme durch den potentiellen neuen Benutzerknoten (1, 3), den neuen Benutzerknoten (1, 3) zu unterstützen, in den Datenkommunikationsnetzdienst aufgenommen zu werden.

## Revendications

1. Procédé pour étendre un service de réseau de communications de données en permettant à un noeud (1, 3) d'utilisateur existant du service de réseau de communications de données de former un message d'invitation destiné à un noeud (1, 3) de nouvel utilisateur potentiel, lequel message d'invitation est envoyé à un serveur (15) via le service de réseau de communications de données, **caractérisé en ce que** :
le message d'invitation est transmis par le serveur (15) au noeud (1, 3) de nouvel utilisateur potentiel par un service de communications différent, et, suite à l'acceptation par le noeud (1, 3) de nouvel utilisateur potentiel, une application logicielle (21) permettant au noeud (1, 3) de nouvel utilisateur d'être intégré dans le service de réseau de communications de données est téléchargée automatiquement au noeud (1, 3) de nouvel utilisateur.

2. Procédé selon la revendication 1, dans lequel le service de réseau de communications de données émet et reçoit des données par l'Internet (13).

3. Procédé selon la revendication 1, dans lequel le service de communications différent est le Short Messaging Service (SMS).

4. Procédé selon la revendication 1, dans lequel, à la suite du téléchargement automatique de l'application logicielle (21), le serveur (15) fournit aux deux noeuds (1, 3) d'utilisateurs des détails de contacts mutuels dans le service de réseau de communications de données.

5. Procédé selon la revendication 4, dans lequel le serveur (15) fournit aux deux noeuds (1, 3) d'utilisateurs des détails de contacts mutuels en plaçant des messages fictifs, apparaissant chacun comme provenant de l'autre noeud, dans des boîtes de réception respectives pour les noeuds (1, 3) d'utilisateurs.

6. Procédé selon l'une quelconque des revendications précédentes, dans lequel ledit service de réseau de communications de données est fourni via les supports de données de réseaux radioélectriques cellulaires 2,5G et 3G, dont : GPRS, EDGE, W-CDMA, CDMA2000 & HSDP.

7. Procédé selon l'une quelconque des revendications précédentes, dans lequel lesdits noeuds (1, 3) d'utilisateurs sont des téléphones cellulaires ou des assistants numériques personnels associés à la téléphonie cellulaire.

8. Procédé selon l'une quelconque des revendications précédentes, dans lequel ladite application logicielle (21) comprend un moyen formant code de programme pour permettre à l'utilisateur de former ledit message d'invitation.

9. Procédé selon l'une quelconque des revendications précédentes, dans lequel ledit message d'invitation est acheminé vers le noeud (1, 3) de nouvel utilisateur à l'aide du numéro téléphonique du noeud (1, 3) de nouvel utilisateur, entré au noeud (1, 3) d'utilisateur d'existant.

10. Procédé selon l'une quelconque des revendications précédentes, dans lequel, à la réception, dans le serveur, d'un nouveau message pour un noeud (1, 3) d'utilisateur existant, le serveur (15) envoie un message d'alerte au noeud (1, 3) d'utilisateur existant via ledit service de communications différent.

11. Procédé selon la revendication 10, dans lequel le signal d'alerte envoyé au noeud d'utilisateur existant est un appel téléphonique.

12. Procédé selon la revendication 11, dans lequel il est mis fin à l'appel téléphonique à la réception d'une tonalité de sonnerie en provenance du noeud d'utilisateur existant.

13. Service de communications en réseau, comportant un serveur (15) et une pluralité de noeuds (1, 3) d'utilisateurs, le serveur (15) et chacun des noeuds (1, 3) d'utilisateurs étant pourvu d'une application logicielle pour exécuter le procédé selon l'une quelconque des revendications précédentes.

14. Serveur (15) utilisable dans un service de réseau de communications selon la revendication 13 et pourvu d'une application logicielle (21) servant à recevoir des messages d'invitation envoyés via le service de réseau de communication de données, à les transmettre au noeud (1, 3) de nouvel utilisateur potentiel par un service de communications différent, et suite à l'acceptation par le noeud (1, 3) de nouvel utilisateur potentiel, et permettant au noeud (1, 3) de nouvel utilisateur d'être intégré dans le service de réseau de communication de données.
